# FASCICULE DE BREVET EUROPEEN

(11) **EP 1 300 334 B1**
(45) Date de publication et mention de la délivrance du brevet: **22.03.2006**
(21) Numéro de dépôt: 02292431.0
(22) Date de dépôt: 03.10.2002
(51) Int. Cl.: B64C 1/14, B64D 25/14, E05F 15/04

(54) **Dispositif et procédé de commande de l'ouverture d'urgence d'une porte d'évacuation d'un aéronef**
Notöffnungsvorrichtung und -verfahren für eine Luftfahrzeugsfluchttür
Emergency opening device and method for an aircraft escape door

(30) Priorité: 05.10.2001 FR 0112838
(43) Date de publication de la demande: 09.04.2003
(73) Titulaire: AIRBUS France, 31060 Toulouse Cedex 03 (FR)
(72) Inventeur: Baderspach, Jérôme, 31200 Toulouse (FR); Modern, Albert, 31700 Blagnac (FR); Rondot, Sébastien, 31400 Toulouse (FR)
(74) Mandataire: Poulin, Gérard

(56) Documents cités:
- EP-A- 0 512 588
- EP-A- 0 741 073
- US-A- 5 379 971

## Description

### Domaine technique

La présente invention concerne un dispositif et un procédé de commande de l'ouverture d'urgence d'une porte d'évacuation d'un aéronef. Elle concerne également un dispositif d'évacuation d'urgence d'un aéronef équipé d'une telle commande d'ouverture. On entend par porte d'évacuation une porte de l'aéronef destinée à faire sortir les occupants de l'aéronef en cas d'incident ou d'accident. Une porte d'évacuation peut aussi servir, dans une utilisation normale, pour l'embarquement ou le débarquement de passagers et/ou de membres d'équipage de l'aéronef.

L'invention peut trouver des applications à différents types d'aéronefs, civils ou militaires, et en particulier aux avions de transport de passagers.

### Etat de la technique antérieure.

Les entrées/sorties des aéronefs sont généralement délimitées par un cadre, lié au fuselage, et reçoivent une porte reliée au cadre par une articulation. L'articulation définit la trajectoire de la porte lorsqu'elle est déplacée entre une position fermée et une position ouverte. L'articulation permet également de contrôler l'orientation de la porte lors de son déplacement.

Les entrées/sorties sont également pourvues de moyens de verrouillage de la porte sur le cadre. Les moyens de verrouillage, prévus pour garantir la position fermée des portes, sont généralement manoeuvrés manuellement par l'équipage ou par le personnel au sol des aéroports.

Enfin, la porte et le cadre sont pourvus de butées qui viennent en contact lors de la fermeture. Une pressurisation à l'intérieur de l'aéronef contribue au maintien en contact des butées sur des surfaces d'appui qui leurs sont associées.

Les entrées/sorties des aéronefs peuvent être utilisées comme des issues de secours pour une évacuation d'urgence. Elles sont à cet effet pourvues de structures d'évacuation telles qu'un toboggan gonflable, par exemple. Les toboggans peuvent être stockés dans des emplacements ménagés dans le fuselage ou la voilure de l'appareil. Il est toutefois plus courant de prévoir un réceptacle pour les toboggans, directement dans les portes des entrées/sorties susceptibles d'être empruntées en cas d'évacuation d'urgence.

Lorsque la porte est fermée, après l'embarquement des passagers, le personnel de bord arme un système permettant de relier mécaniquement le toboggan, logé dans la porte, au seuil de celle-ci, c'est-à-dire au cadre fixe.

En cas d'ouverture normale de la porte, le système de lien mécanique du toboggan avec le cadre de la porte est désarmé et la porte peut être ouverte sans déploiement du toboggan.

En revanche, en cas d'ouverture de la porte lors d'une procédure d'évacuation d'urgence, le toboggan est déployé automatiquement vers l'extérieur. Le déploiement a lieu, par exemple, par gonflage avec des moyens de gonflage prévus à cet effet.

Le règlement des autorités de certification stipule que l'évacuation totale d'un aéronef doit être faite en 90 secondes, avec la moitié des portes et issues de secours opérationnelles. Cet intervalle de temps débute lorsqu'un signal d'évacuation (panneau lumineux, signal sonore, ...) est émis, et se termine à l'arrivée au sol des passagers et de l'équipage au complet. Il englobe donc l'ouverture des portes, le gonflage des toboggans, l'évacuation des passagers, la vérification par l'équipage que tous les passagers ont bien quitté l'appareil et l'évacuation de l'équipage. Ces différentes étapes sont d'autant plus difficiles à mettre en oeuvre dans le temps imparti, qu'il faut tenir compte du temps d'hésitation inévitable des passagers devant les toboggans et du parcours suivi par les passagers pour atteindre les issues de secours.

Le délai imparti pour évacuer la totalité des passagers et de l'équipage étant très court, il est important d'effectuer en un minimum de temps les opérations non soumises à l'intervention de l'homme, c'est-à-dire notamment l'ouverture de la porte et le gonflage des toboggans. A cet effet, en cas d'accident ou d'incident, un dispositif d'ouverture d'urgence de la porte se substitue au dispositif utilisé en situation normale. Lorsque le personnel de bord déverrouille la porte pour l'ouvrir, le dispositif d'ouverture d'urgence applique automatiquement à la porte un effort très important permettant une ouverture rapide de la porte, sans intervention humaine et pour pallier les contraintes externes pouvant gêner l'ouverture. En général, une forte pression est délivrée dans un vérin qui, par l'intermédiaire d'un piston, ouvre brutalement la porte.

Parallèlement, l'action de déverrouillage de la porte initie le déploiement et le gonflage du toboggan. Typiquement, la durée de ces opérations (ouverture de porte et déploiement-gonflage du toboggan) ne doit pas excéder 10 secondes.

Les constructeurs aéronautiques cherchent à gagner du temps sur les opérations automatiques d'ouverture de la porte et de déploiement-gonflage du toboggan. Ces opérations sont effectivement les seules qu'il est possible d'optimiser. Un but constant est donc d'augmenter les vitesses d'ouverture de la porte et de déploiement-gonflage du toboggan.

Un problème de sécurité se pose toutefois lorsque le temps mis pour l'ouverture de la porte devient insuffisant pour garantir le déploiement complet du toboggan.

Le *document EP-0 741 073* est cité à titre d'illustration d'un arrière-plan technologique. Il décrit un dispositif d'amortissement en ouverture et en fermeture d'une porte d'accès à bord. Le document ne vise toutefois que l'ouverture et la fermeture de la porte lors de conditions normales d'utilisation, c'est-à-dire pour l'embarquement et le débarquement des passagers. Le dispositif décrit permet d'éviter qu'une forte pression exercée de façon intempestive sur la porte (rafale de vent par exemple) ne rabatte la porte contre le fuselage (risque de choc et de dégradation sur le fuselage ou dans un des mécanismes de la porte elle-même) ou sur un membre du personnel de cabine (bras coincé dans l'encadrement de la porte, par exemple). Le dispositif décrit dans le document mentionné ci-dessus, a donc pour seul objectif de répondre à une sollicitation extérieure intempestive susceptible de modifier les conditions normales d'utilisation de la porte.

### Exposé de l'invention.

La présente invention a pour but de proposer un dispositif et un procédé de commande de l'ouverture d'urgence d'une porte d'un aéronef, de même qu'un dispositif d'évacuation d'urgence ne présentant pas les limitations mentionnées ci-dessus.

Un but est en particulier d'autoriser une ouverture d'urgence des portes d'entrée/sortie qui soit particulièrement rapide.

Un autre but est d'éviter une ouverture complète de la porte avant le déploiement d'une structure d'évacuation associée à l'entrée/sortie considérée.

Un but est enfin de ne pas retarder l'ouverture de la porte jusqu'au déploiement complet de la structure d'évacuation.

Pour atteindre ces buts, l'invention a plus précisément pour objet un dispositif de commande de l'ouverture d'urgence d'une porte d'un aéronef comprenant :
- au moins un organe de déclenchement de l'ouverture d'urgence,
- au moins un actionneur de la porte, et
- des moyens d'alimentation en puissance de l'actionneur, répondant à l'organe de déclenchement.

Conformément à l'invention, le dispositif comporte en outre des moyens de modification de la puissance délivrée par les moyens d'alimentation à l'actionneur, pour commander une ouverture de la porte plus lente dans une phase initiale d'ouverture et plus rapide dans au moins une phase d'ouverture subséquente. Bien que la description qui suit se réfère à un seul organe de déclenchement et un seul actionneur, le dispositif de l'invention est compris comme pouvant présenter plusieurs organes de déclenchement, manuels ou automatiques, de même que plusieurs actionneurs. Dans le cas d'une pluralité d'actionneurs, ceux-ci peuvent fonctionner de façon concomitante, successive ou séquentielle.

Bien que, dans chaque phase, la puissance délivrée à l'actionneur soit suffisante pour autoriser l'ouverture de la porte, la puissance délivrée à l'actionneur est plus faible dans la phase initiale que dans la ou les phases subséquentes. Dans la phase initiale la puissance est prévue pour provoquer une ouverture relativement lente.

L'ouverture initiale lente permet, tout en déclenchant simultanément l'ouverture de la porte et le déploiement d'une structure d'évacuation, de différer l'ouverture complète de la porte et donc de gagner du temps pour le déploiement de la structure d'évacuation. La phase d'ouverture lente de la porte est dite initiale dans la mesure où la porte n'est pas complètement ouverte au terme de cette phase. Cette caractéristique évite qu'un passager, pris d'agitation, ne s'extraie de l'aéronef avant le déploiement complet de la structure d'évacuation.

Lors de la ou des phases subséquentes d'ouverture de la porte, une puissance plus grande est fournie à l'actionneur de façon à poursuivre et achever rapidement l'ouverture de la porte.

Dans une réalisation particulière du dispositif de commande, celui-ci peut comporter un séquenceur temporisé pour commander la délivrance à l'actionneur d'une première puissance lors de la phase initiale et d'une deuxième puissance supérieure à la première puissance dans la phase finale.

Le séquenceur temporisé peut être, par exemple, un séquenceur électrique. Il peut aussi comporter un ressort de détente libérable par l'organe de déclenchement et couplé à un amortisseur de détente. Le séquenceur est relié aux moyens de modification de la puissance délivrée à l'actionneur.

Dans des variantes non décrites en détail ici, les phases d'ouverture peuvent aussi être asservies à un degré de déploiement de la structure d'évacuation des passagers.

Les moyens d'alimentation en puissance peuvent être, par exemple, de type électrique, hydraulique ou pneumatique. Ils sont alors associés à des actionneurs sous la forme de vérins électriques, hydrauliques, ou pneumatiques.

Dans une mise en oeuvre avantageuse de l'invention, décrite ci-après, les moyens d'alimentation en puissance sont des moyens pneumatiques et, plus précisément, des moyens à gaz sous pression.

Ils comportent, par exemple, une première et une deuxième sources de gaz sous pression, la première source de gaz sous pression étant à une pression inférieure à la deuxième source de gaz sous pression. Les moyens de modification de la puissance délivrée à l'actionneur comportent un distributeur pour relier successivement l'actionneur à la première puis à la deuxième source de gaz sous pression. Les sources de gaz sous pression peuvent comporter des réservoirs d'air comprimé ou d'azote.

L'alimentation de l'actionneur par la première source de gaz sous pression correspond à la phase d'ouverture initiale lente, tandis que l'alimentation de l'actionneur par la deuxième source de gaz sous pression correspond, par exemple, à une deuxième phase d'ouverture rapide et complète de la porte.

Selon une variante de réalisation du dispositif, les moyens d'alimentation peuvent aussi comporter une unique source de gaz sous pression. Dans ce cas, les moyens de modification de la puissance délivrée à l'actionneur comportent une vanne de dosage d'un flux de gaz entre la source de gaz sous pression et l'actionneur.

L'invention concerne également un dispositif d'évacuation d'urgence d'un aéronef comprenant :
- une porte d'évacuation de l'aéronef
- au moins une structure d'évacuation de passagers susceptible d'être déployée au voisinage de la porte, et
- un dispositif de commande d'ouverture d'urgence de la porte, tel que décrit ci-dessus.

On entend par structure d'évacuation tout équipement susceptible d'être déployé en cas d'urgence pour faciliter l'évacuation des passagers et de l'équipage. En particulier la structure d'évacuation peut comporter un ou plusieurs toboggans gonflables et/ou des structures pouvant servir de canot.

De façon avantageuse, l'organe de déclenchement de l'ouverture d'urgence est couplé à des moyens de déploiement de la structure d'évacuation de passagers.

Enfin, l'invention concerne un procédé d'ouverture d'urgence automatique de la porte d'un aéronef. Conformément au procédé, la porte est soumise à une première sollicitation dans une phase initiale d'ouverture et à une deuxième sollicitation, supérieure à la première sollicitation, dans une phase subséquente d'ouverture de la porte.

Bien que le déploiement de la structure d'évacuation puisse encore s'achever pendant une phase d'ouverture subséquente à la phase initiale, la durée de la phase initiale est de préférence fixée de façon à être supérieure ou égale à la durée de déploiement de la structure d'évacuation. A titre d'exemple, la durée de la phase initiale d'ouverture de la porte et de déploiement du toboggan peut être de l'ordre de 6 secondes et celle d'une phase subséquente d'ouverture peut être de 4 secondes.

D'autres caractéristiques et avantages de l'invention ressortiront de la description qui va suivre, en référence aux figures des dessins annexés. Cette description est donnée à titre purement illustratif et non limitatif.

### Brève description des figures.

La figure 1 montre de façon schématique un dispositif de commande de l'ouverture d'une porte d'un aéronef, conforme à l'invention, et un dispositif d'évacuation qui en est équipé.

La figure 2 montre de façon plus détaillée une réalisation particulière du dispositif de commande de la figure 1.

La figure 3 montre de façon schématique un autre dispositif de commande de l'ouverture d'une porte d'un aéronef, également conforme à l'invention, et un dispositif d'évacuation qui en est équipé.

La figure 4 montre de façon plus détaillée une réalisation particulière du dispositif de commande de la figure 3.

### Description détaillée de modes de mise en oeuvre de l'invention.

Dans la description qui suit des parties identiques, similaires ou équivalentes des différentes figures sont repérées par les mêmes signes de référence pour faciliter le report entre les figures. Par ailleurs, et dans un souci de clarté des figures, tous les éléments ne sont pas représentés selon une échelle uniforme.

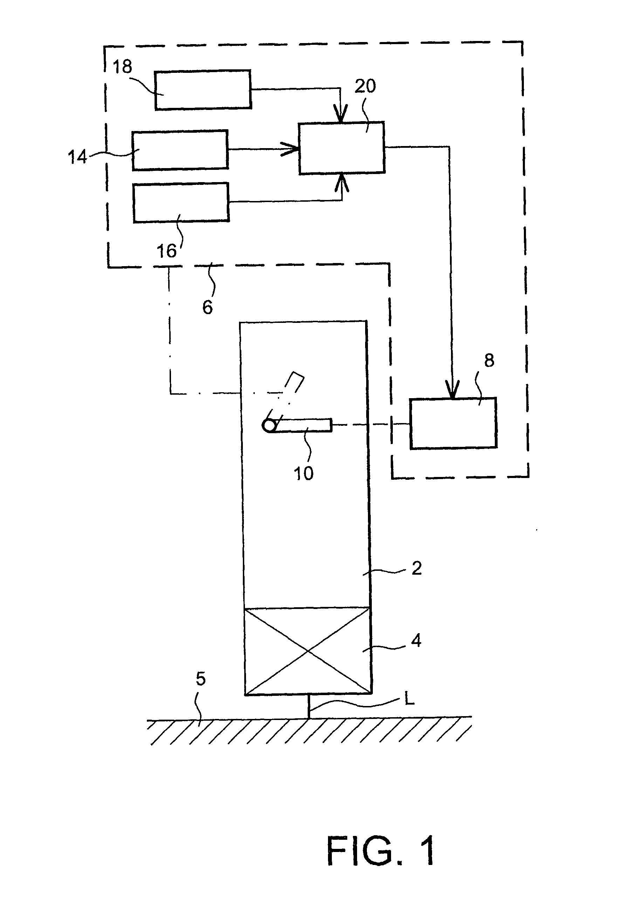

La figure 1 montre un dispositif d'évacuation d'urgence comprenant une porte 2. Il s'agit d'une porte d'accès à bord permettant l'embarquement ou le débarquement de passagers en cas d'utilisation normale. Le passage de la porte, situé, par exemple, au voisinage de la voilure de l'aéronef, constitue également une issue de secours pour une évacuation d'urgence des passagers de l'aéronef.

Dans la partie inférieure de la porte 2 est logée une structure d'évacuation de passagers, telle qu'un toboggan 4. Comme le représente symboliquement la figure 1, le toboggan est rendu solidaire du fuselage 5 de l'aéronef avant le décollage. Il peut notamment être rendu solidaire du seuil de la porte. Ceci a lieu par l'armement d'un mécanisme de liaison L, commandé par le personnel de cabine. Le mécanisme de liaison est représenté symboliquement par un simple trait. A la fin du vol, lorsque aucune procédure d'évacuation d'urgence n'a été mise en oeuvre, le mécanisme de liaison est désarmé et le toboggan reste dans son logement 4 dans le bas de la porte 2.

En revanche, en cas d'évacuation de secours, le mécanisme de liaison du toboggan au fuselage n'est pas désarmé. Le toboggan reste ainsi solidaire du fuselage, lors de son déploiement.

La référence 10 de la figure 1 désigne un levier formant un organe de déclenchement de l'ouverture d'urgence de la porte 2. Lorsque le levier 10 est manoeuvré, un dispositif de commande de l'ouverture automatique de la porte 2 est déclenché. Le fait de manoeuvrer le levier 10 a aussi pour effet de déclencher le déploiement de la structure d'évacuation, en l'occurrence le toboggan 4.

Le dispositif d'ouverture d'urgence de la porte comprend pour l'essentiel un actionneur 8, des moyens 14, 16 d'alimentation en puissance de l'actionneur, et des moyens 20 pour modifier la puissance délivrée à l'actionneur.

La référence 18 désigne un séquenceur temporisé prévu pour piloter les moyens 20 de modification de la puissance délivrée.

Dans l'exemple illustré par la figure 1, les moyens d'alimentation comportent deux sources d'alimentation en puissance. Une première source 14, pour une alimentation en puissance plus faible, et une source 16 pour une alimentation en puissance plus forte. Le moyen de modification 20 est prévu pour relier la première source d'alimentation 14 à l'actionneur 8 dans une phase initiale d'ouverture, pour procéder à une ouverture lente de la porte 2. Puis, après un temps fixé par le séquenceur temporisé 18, le moyen de modification 20 relie la deuxième source 16 à l'actionneur 8 pour une ouverture rapide de la porte.

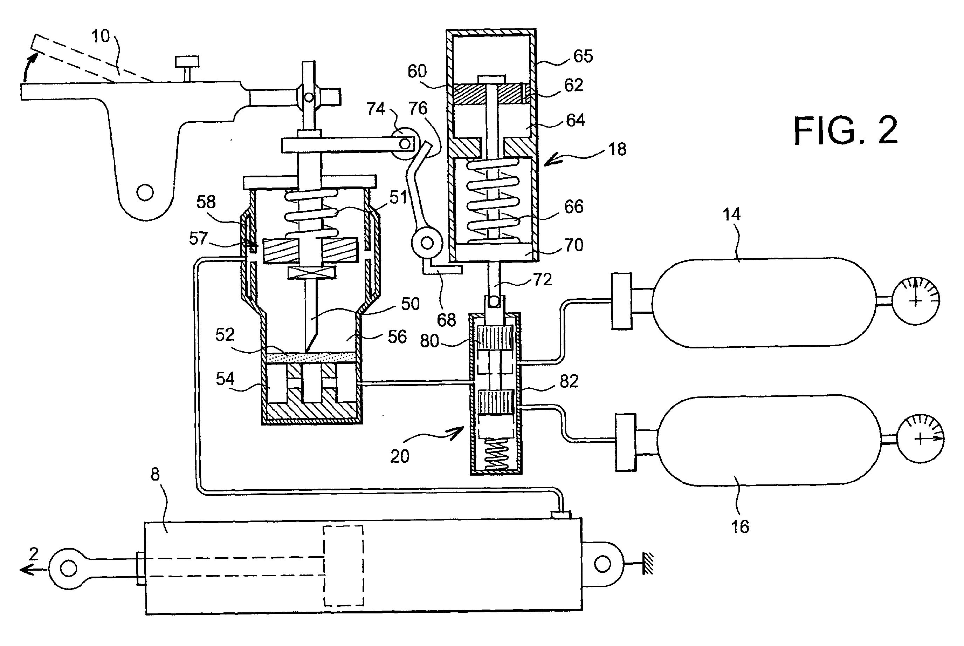

La figure 2, décrite ci-après, illustre une réalisation particulière du dispositif d'ouverture d'urgence 6 de la figure 1 dans laquelle l'ouverture de la porte est pneumatique.

Les première et seconde sources d'alimentation en puissance, 14 et 16, sont des réservoirs de gaz sous pression, par exemple d'air comprimé. Par analogie avec la figure 1, les réservoirs sont également repérés par les références 14 et 16. La pression du gaz contenu dans le premier réservoir 14 est inférieure à celle du gaz contenu dans le deuxième réservoir 16.

Lorsque le levier 10 est manoeuvré comme indiqué par une flèche, celui-ci provoque le déplacement d'un poinçon 50, chargé par un ressort 51. Le poinçon 50 vient percer une membrane 52 d'un boîtier de percussion. La membrane 52 sépare une première chambre 54 du boîtier de percussion, d'une seconde chambre 56.

Bien que cet aspect soit encore abordé dans la suite de la description, on peut noter que la première chambre 54 contient un gaz sous pression qui est fourni par le premier réservoir 14. Ce gaz se propage dans la seconde chambre 56 dès la rupture de la membrane 52.

Le déplacement du poinçon entraîne aussi l'ouverture d'une soupape 57 qui met en communication la deuxième chambre 56 avec une troisième chambre 58 reliée à l'actionneur 8 de la porte.

L'actionneur 8 est ici un vérin pneumatique. Ce vérin comprend un piston mu par le gaz sous pression en provenance du premier réservoir 14. Le gaz sous pression fourni au vérin traverse les première, deuxième et troisième chambres du boîtier de percussion. Alimenté par le gaz sous pression du premier réservoir 14, le vérin entame l'ouverture lente de la porte.

La manoeuvre du levier 10 provoque également le déclenchement du séquenceur temporisé 18. Celui ci comprend un piston 60 chargé par un ressort 66. Le piston 60 est pourvu d'un gicleur 62 et sépare deux chambres 64, 65 du séquenceur. Un fluide, incompressible contenu dans les chambres 64, 65 doit passer par le gicleur 62, de la chambre 64 à la chambre 65, pour autoriser le déplacement du piston.

Dans une position de repos, représentée sur la figure 2, un taquet 68 en appui sur une collerette 70 solidaire de la tige 72 du piston 60, empêche la détente du ressort. Lorsque le levier 10 est manoeuvré, une roulette 74 vient appuyer sur une rampe 76 et retire le taquet 68. Le ressort 66 provoque alors un déplacement du piston 60. Le déplacement du piston a lieu à une vitesse dictée essentiellement par le passage du fluide par le gicleur 62, c'est-à-dire par le diamètre du gicleur. Le gicleur 62 constitue avec le piston et les chambres 64, 65, un amortisseur de détente du ressort 66.

Dans son déplacement, le piston entraîne la tige de piston 72 qui vient déplacer un tiroir de distribution 80.

Le tiroir de distribution 80 fait partie des moyens 20 de modification de la puissance délivrée à l'actionneur de la porte. Le tiroir 80, qui coulisse dans un distributeur 82, est déplacé depuis une position de raccordement du premier réservoir 14 à gaz comprimé vers une position de raccordement du deuxième réservoir 16 à gaz comprimé.

Plus précisément, le tiroir 80 qui occupe une première position dans laquelle il libère un passage du gaz en provenance du premier réservoir 14 et obture un passage de gaz en provenance du deuxième réservoir 16, est déplacé vers une position dans laquelle il libère un passage de gaz en provenance du deuxième réservoir et obture un passage de gaz en provenance du premier réservoir.

Après le déplacement du tiroir de distribution, une deuxième phase d'ouverture de la porte est opérée. Le gaz sous forte pression du deuxième réservoir traverse le boîtier de percussion et est appliqué au vérin 8. Il en résulte un ouverture rapide de la porte.

Préférentiellement, la temporisation, c'est-à-dire en particulier le diamètre du gicleur 62, est ajustée de façon à autoriser un déploiement suffisant du toboggan entre l'instant où le levier 10 est actionné et l'instant où le deuxième réservoir de gaz sous pression 16 est relié au vérin.

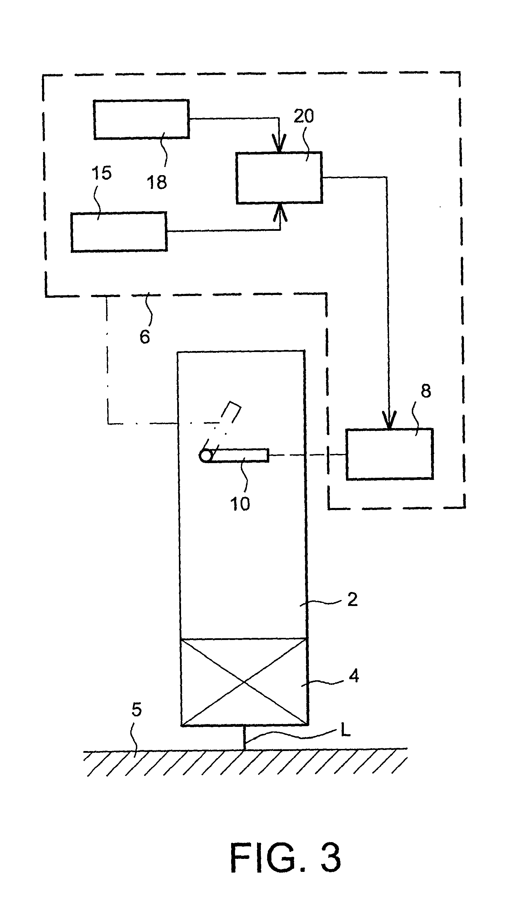

Une autre possibilité de réalisation d'un dispositif d'évacuation conforme à l'invention est illustrée par la figure 3.

La figure 3 présente un grand nombre de parties identiques à celles de la figure 1. La description de ces parties est par conséquent omise.

A la différence de la figure 1, le dispositif d'ouverture d'urgence 6 de la figure 3 ne comporte qu'une seule source d'alimentation en puissance. Celle-ci est repérée avec la référence 15.

Le moyen 20 de modification de la puissance délivrée à l'actionneur 8, n'est plus un moyen permettant de commuter simplement entre deux sources mais un moyen permettant d'ajuster la puissance fournie par la source unique 15. L'ajustage peut être graduel entre différentes valeurs, et correspondre ainsi à différentes phases de l'ouverture de la porte. L'ajustage de la puissance peut aussi être continu entre une valeur nulle et une valeur maximum.

Dans ce dernier cas, la phase initiale et la ou les phases subséquentes ne correspondent pas à des paliers de puissance constante mais à des plages d'évolution de la puissance fournie à l'actionneur.

Le séquenceur temporisé 18 sert, dans cet exemple de mise en oeuvre, à contrôler la vitesse d'évolution de la pression fournie à l'actionneur.

Cette vitesse est ajustée de préférence pour que l'ouverture de la porte soit relativement lente lors du déploiement du toboggan et plus rapide après le déploiement.

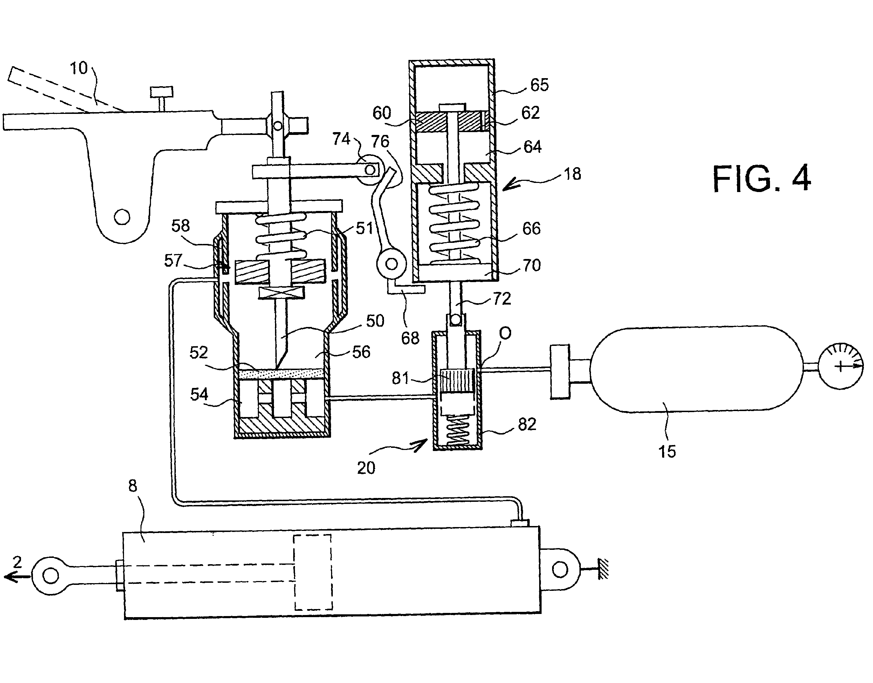

La figure 4 montre une réalisation particulière d'un aspect du dispositif de la figure 3, dans laquelle l'ouverture de la porte est pneumatique.

La figure comprend un grand nombre d'éléments déjà évoqués en relation avec la figure 2. Pour ces éléments, repérés avec les mêmes références, on peut se référer à la description qui précède.

On constate, sur la figure 4, que le dispositif d'ouverture ne contient qu'un unique réservoir 15 de gaz sous pression. Ce réservoir remplace les deux réservoirs 14 et 16 de la figure 2. Toutefois, la pression du gaz contenu dans le réservoir 15 est supérieure à la pression du gaz contenue dans le premier réservoir 14 du dispositif de la figure 2. En d'autres termes, la pression est suffisante pour autoriser une ouverture rapide de la porte. La pression du réservoir unique 15 de la figure 4 est de préférence supérieure ou égale à la pression du deuxième réservoir 16 de la figure 2.

Lors de la phase initiale d'ouverture de la porte, une soupape 81 d'une vanne 82, comparable au distributeur de la figure 2, occupe une position dans laquelle elle obture partiellement un orifice de passage (O) du gaz du réservoir 15 vers les chambres 54, 56, 58 et vers le vérin 8. Dans cette position, et lorsque la membrane 52 est perforée, du gaz sous une pression relativement faible est dirigé vers le vérin pour une ouverture lente de la porte. La pression du gaz chute en effet dans un étranglement constitué par l'obturation partielle du passage de gaz.

Puis, sous l'action du séquenceur temporisé 18, la soupape 81 est poussée dans une deuxième position dans laquelle le passage de gaz est entièrement libéré et dans lequel du gaz sous forte pression est appliqué au vérin 8. Ceci correspond à une seconde phase d'ouverture rapide de la porte.

La transition entre la phase initiale où le passage de gaz est partiellement obturé à la phase où il est entièrement libéré peut être franche ou graduelle. Le caractère graduel peut être obtenu par le déplacement de la tige 72 du piston du séquenceur 18 et/ou par la forme d'un passage de gaz prévu dans la vanne 82 et/ou par la forme de la soupape 81. Lorsque la transition entre une position d'étranglement du passage de gaz dans la vanne 82 et une position libérée est franche, le déplacement de la tige est simplement mis à profit pour régler le temps mis entre l'instant de déclenchement initial et l'instant où la position de libre passage du gaz est atteinte.

## Revendications

1. Dispositif de commande de l'ouverture d'urgence d'une porte d'un aéronef comprenant :
- au moins un organe (10) de déclenchement de l'ouverture d'urgence,
- au moins un actionneur (8) de la porte, et
- des moyens (14, 15, 16) d'alimentation en puissance de l'actionneur (8), répondant à l'organe de déclenchement,
**caractérisé en ce qu'**il comporte en outre des moyens (18, 80, 81, 82) de modification de la puissance délivrée par les moyens d'alimentation à l'actionneur (8), pour commander une ouverture de la porte plus lente dans une phase initiale d'ouverture et plus rapide dans au moins une phase d'ouverture subséquente.

2. Dispositif selon la revendication 1, dans lequel les moyens de modification de la puissance délivrée à l'actionneur comportent un séquenceur temporisé (18) pour délivrer à l'actionneur une première puissance lors de la phase initiale et une deuxième puissance supérieure à la première puissance dans la phase subséquente.

3. Dispositif selon la revendication 1, dans lequel les moyens d'alimentation en puissance sont des moyens pneumatiques.

4. Dispositif selon la revendication 3, dans lequel les moyens d'alimentation en puissance comportent une première et une deuxième sources de gaz sous pression, la première source de gaz sous pression (14) étant à une pression inférieure à la deuxième source de gaz sous pression (16), et les moyens de modification de la puissance délivrée à l'actionneur comportent un distributeur (82) pour relier successivement l'actionneur à la première puis à la deuxième source de gaz sous pression.

5. Dispositif selon la revendication 3, dans lequel les moyens d'alimentation en puissance comportent une unique source (15) de gaz sous pression et dans lequel les moyens de modification de la puissance délivrée à l'actionneur comportent une vanne (82) de dosage d'un flux de gaz entre la source de gaz sous pression et l'actionneur.

6. Dispositif selon la revendication 5, dans lequel la vanne (82) comporte un orifice de passage (O) du gaz sous pression et une soupape (81) actionnable pour obturer plus ou moins l'orifice de passage.

7. Dispositif selon la revendication 2, dans lequel le séquenceur temporisé comprend un ressort de détente (66) libérable par l'organe de déclenchement (10) et relié aux moyens de modification de la puissance délivrée à l'actionneur, le ressort de détente étant couplé à un amortisseur de détente (60, 62, 64, 65).

8. Dispositif d'évacuation d'urgence d'un aéronef comprenant :
- une porte de sortie de l'aéronef (2),
- au moins une structure d'évacuation de passagers (4), susceptible d'être déployée au voisinage de la porte, et
- un dispositif de commande d'ouverture d'urgence de la porte,
**caractérisé en ce que** le dispositif de commande d'ouverture d'urgence est conforme à l'une quelconque des revendications précédentes.

9. Dispositif d'évacuation selon la revendication 8, dans lequel un organe de déclenchement (10) de l'ouverture d'urgence est couplé à des moyens de déploiement de la structure d'évacuation de passagers.

10. Dispositif d'évacuation selon la revendication 9, dans lequel la structure d'évacuation (4) est logée dans la porte et susceptible d'être rendue solidaire d'un seuil de la porte.

11. Procédé d'ouverture d'urgence automatique d'une porte (2) d'un aéronef, dans lequel la porte (2) est soumise à une première sollicitation dans une phase initiale d'ouverture de la porte et à une deuxième sollicitation, supérieure à la première sollicitation dans une phase subséquente d'ouverture de la porte.

12. Procédé selon la revendication 11, dans lequel la phase initiale d'ouverture de la porte a une durée supérieure ou égale à une durée de déploiement d'une structure d'évacuation (4).

## Patentansprüche

1. Vorrichtung zum Steuern der Notöffnung einer Luftfahrzeugtür, mit:
- mindestens einem Element (10) zum Auslösen der Notöffnung,
- mindestens einem Betätiger (8) der Tür, und
- Mitteln (14,15,16) zur Leistungsversorgung des Betätigers (8), die auf das Auslöseelement ansprechen,
**dadurch gekennzeichnet, dass** sie außerdem
Mittel (18,80,81,82) zur Modifikation der von den Mitteln zur Leistungsversorgung des Betätigers (8) gelieferten Leistung umfasst, um ein langsameres Öffnen der Tür in einer Anfangsphase des Öffnens und ein schnelleres Öffnen in mindestens einer nachfolgenden Öffnungsphase zu steuern.

2. Vorrichtung nach Anspruch 1, wobei die Mittel zur Modifikation der den Betätigern gelieferten Leistung eine Zeitfolgeschaltung (18) umfassen, um dem Betätiger eine erste Leistung während der Anfangsphase und eine zweite Leistung, die höher ist als die erste Leistung, in der nachfolgenden Phase zu liefern.

3. Vorrichtung nach Anspruch 1, wobei die Leistungsversorgungsmittel pneumatische Mittel sind.

4. Vorrichtung nach Anspruch 3, wobei die Leistungsversorgungsmittel eine erste und eine zweite Quelle druckbeaufschlagten Gases umfassen, wobei die erste Quelle (14) druckbeaufschlagten Gases einen geringeren Druck aufweist als die zweite Quelle (16) druckbeaufschlagten Gases, und die Mittel zur Modifikation der dem Betätiger gelieferten Leistung einen Verteiler (82) zum sukzessiven Verbinden des Betätigers mit der ersten und dann mit der zweiten Quelle druckbeaufschlagten Gases umfassen.

5. Vorrichtung nach Anspruch 3, wobei die Leistungsversorgungsmittel eine einzige Quelle (15) druckbeaufschlagten Gases umfassen, und wobei die Mittel zur Modifikation der dem Betätiger gelieferten Leistung ein Ventil (82) zur Dosierung eines Gasflusses zwischen der Quelle druckbeaufschlagten Gases und dem Betätiger umfassen.

6. Vorrichtung nach Anspruch 5, wobei das Ventil (82) eine Durchgangsöffnung (0) des druckbeaufschlagten Gases und eine Drosselklappe (81) umfasst, die betätigbar ist, um die Durchgangsöffnung mehr oder minder zu versperren.

7. Vorrichtung nach Anspruch 2, wobei die Zeitfolgeschaltung eine von dem Auslöseelement (10) freigebbare und mit den Mitteln zur Modifikation der dem Betätiger gelieferten Leistung verbundene Druckminderungsfeder (66) umfasst, wobei die Druckminderungsfeder mit einer Druckminderungsdämpfer (60,62,64,65) gekoppelt ist.

8. Vorrichtung zur Notevakuierung eines Luftfahrzeugs, mit
- einer Ausgangstür des Luftfahrzeugs (2),
- mindestens einer Passagier-Evakuierungsstruktur (4), die in der Umgebung der Tür entfaltet bzw. ausgefahren werden kann, und
- einer Vorrichtung zum Steuern der Notöffnung der Tür,
**dadurch gekennzeichnet, dass**
die Vorrichtung zum Steuern der Notöffnung einem der vorangehenden Ansprüche entspricht.

9. Evakuierungsvorrichtung nach Anspruch 8, wobei ein Element (10) zum Auslösen der Notöffnung mit Mitteln zur Entfaltung bzw. zum Ausfahren der Passagier-Evakuierungsstruktur gekoppelt ist.

10. Evakuierungsvorrichtung nach Anspruch 9, wobei die Evakuierungsstruktur (4) in der Tür untergebracht ist und mit einer Schwelle der Tür fest verbunden werden kann.

11. Verfahren zur automatischen Notöffnung einer Tür (2) eines Luftfahrzeugs, wobei die Tür (2) einer ersten Beanspruchung in einer anfänglichen Öffnungsphase der Tür ausgesetzt ist, und einer zweiten, höheren Beanspruchung als der ersten in einer nachfolgenden Öffnungsphase der Tür ausgesetzt ist.

12. Verfahren nach Anspruch 11, wobei die anfängliche Öffnungsphase der Tür eine Zeitdauer aufweist, die länger oder gleich einer Zeitdauer zur Entfaltung bzw. zum Ausfahren einer Evakuierungsstruktur (4) ist.

## Claims

1. Control device for emergency opening of an aircraft door comprising :
- at least one triggering mechanism (10) for emergency opening,
- at least one door actuator (8), and
- means (14, 15, 16) of power supply to the actuator (8) responding to the triggering mechanism,
such that it also comprises means (18, 80, 81, 82) for modification of the power delivered by the means of power supply to the actuator (8), to control a slower opening of the door in an initial phase of opening and more rapid opening in at least one subsequent opening phase.

2. Device according to claim 1, in which the means for modification of the power delivered to the actuator comprise a time delay sequencer (18) for delivering a first power to the actuator during the initial phase and a second power greater than the first power in the subsequent phase.

3. Device according to claim 1, in which the means of power supply are pneumatic.

4. Device according to claim 3, in which the means of power supply comprise a first and second sources of pressurized gas, the first source of pressurized gas (14) being at a lower pressure than the second source of pressurized gas (16), and the means for modification of the power delivered to the actuator comprising a distributor (82) to successively link the actuator to the first then the second source of pressurized gas.

5. Device according to claim 3, in which the means of power supply comprise a single source (15) of pressurized gas and in which the means for modification of the power delivered to the actuator comprises a gas flux dosage valve (82) between the source of pressurized gas and the actuator.

6. Device according to claim 5, in which said valve (82) comprises a passage outlet (O) for the pressurized gas and a valve (81) capable of blocking the passage outlet to a greater or lesser degree.

7. Device according to claim 2, in which the time delay sequencer comprises a trigger spring (66) capable of being released by the triggering mechanism (10) and linked to the means for modification of the power delivered to the actuator, the trigger spring being coupled to a shock absorber (60, 62, 64, 65).

8. Aircraft emergency evacuation device comprising :
- an aircraft exit door (2),
- at least one item of passenger evacuation equipment (4) capable of being deployed close to the door, and
- a control device for emergency opening of the door,
such that the emergency opening control device conforms to any of the preceding claims.

9. Evacuation device according to claim 8, in which an emergency opening triggering mechanism (10) is coupled to means of deployment of the passenger evacuation equipment.

10. Evacuation device according to claim 9, in which the evacuation equipment (4) is stowed in the door and capable of being connected to the door threshold.

11. Method for automatic emergency opening of an aircraft door (2), in which the door (2) receives a first actuation in an initial phase of opening of the door and a second actuation, greater than the first actuation, in a subsequent phase of opening of the door.

12. Method according to claim 11, in which the initial phase of opening of the door is of a duration greater than or equal to the duration of the deployment of an item of evacuation equipment (4).
